# EUROPEAN PATENT SPECIFICATION

(11) **EP 1 512 563 B1**
(45) Date of publication and mention of the grant of the patent: **12.12.2007**
(21) Application number: 04020882.9
(22) Date of filing: 02.09.2004
(51) Int. Cl.: B60H 1/00, B60K 37/00

(54) **Display device**
Anzeigevorrichtung
Dispositif d'affichage

(30) Priority: 05.09.2003 JP 2003314094
(43) Date of publication of application: 09.03.2005
(73) Proprietor: ALPS ELECTRIC CO., LTD., Tokyo 145-8501 (JP)
(72) Inventor: Sato, Hiroyuki, Tokyo 145-8501 (JP); Murakami, Kazuyuki, Tokyo 145-8501 (JP); Miyasaka, Yasuhiro, Tokyo 145-8501 (JP); Oikawa, Tomohiro, Tokyo 145-8501 (JP)
(74) Representative: Klunker . Schmitt-Nilson . Hirsch

(56) References cited:
- WO-A-00/32425
- DE-A1- 19 704 253
- DE-C1- 19 636 210
- FR-A- 2 376 601
- US-A- 4 988 996
- US-A- 5 209 397
- PATENT ABSTRACTS OF JAPAN vol. 011, no. 168 (M-594), 29 May 1987 (1987-05-29) & JP 62 001614 A (NIPPON DENSO CO LTD), 7 January 1987 (1987-01-07)
- PATENT ABSTRACTS OF JAPAN vol. 2003, no. 10, 8 October 2003 (2003-10-08) & JP 2003 175717 A (DENSO CORP), 24 June 2003 (2003-06-24)

## Description

### BACKGROUND OF THE INVENTION

### 1. Field of the Invention

The present invention relates to an air conditioning equipment display device for displaying set values related to individual control and overall control of the equipment, in which displaying the set value respectively related to the individual control and the overall control is improved.

### 2. Description of the Related Art

Conventionally, a display device comprising a liquid crystal display unit for displaying a set value related to individual control for equipment, such as an air conditioning device, and a set value related to overall control therefor are widely used as, for example, a vehicle-mounted display device provided in a vehicle-mounted air conditioner. In such a display device, a first display area comprises a driver seat side temperature display area for displaying a first set value related to the individual control for the driver seat side temperature inside a vehicle and a front passenger seat side temperature display area for displaying a second set value related to the individual control for the front passenger seat side temperature inside the vehicle. When overall control for the temperature in the entire inner space of the vehicle including a driver seat side space and a front passenger seat side space is performed, a third set value for the overall control is displayed only in the driver seat side temperature display area and not in the front passenger seat side temperature display area, or the third set value related to the overall control is displayed in both the driver seat side temperature display area and the front passenger seat side temperature display area (see Japanese Unexamined Patent Application Publication No. 2003-175717 (Fig. 3)).

However, at the time of the overall control, when the third set value related to the overall control is displayed only in the driver seat side temperature display area and not in the front passenger seat side temperature display area, it is easy for a driver to conceive that the front passenger seat side temperature is not controlled since no figure is displayed in the front passenger seat side temperature display area, although the temperature in the entire inner space of the vehicle including the front passenger seat side space is controlled.

Further, when the third set value related to the overall control is displayed in both the front passenger seat side temperature display area and the driver seat side temperature display area, the same set value is simultaneously displayed in both the front passenger seat side temperature display area and the driver seat side temperature display area. Hence, even though an operator views the set value displayed in the display area, it is difficult to distinguish whether the individual control of the driver seat side temperature and the front passenger seat side temperature is performed or the overall temperature control is performed.

DE 196 36 210 C1 discloses a vehicle air conditioning equipment having a first display area for displaying the temperature of the driver seat side of the vehicle and a second display area for displaying the temperature of the passenger seat side of the vehicle.

There are also known devices having three or more display areas. E.g. FR-A-2 376 601 discloses a clock having an alarm function. The display unit of the clock is subdivided into three areas for indicating the date, the day of the week and the actual time, respectively.

US-A-4 988 996 discloses a display system in a marine vessel. The display device is subdivided into plural display areas for displaying values like the oil level, the fuel level, the vessel speed, the engine speed and the like.

### SUMMARY OF THE INVENTION

Accordingly, the present invention is designed to solve the above-mentioned problems, and it is an object of the present invention to provide an air conditioning equipment display device which enables an operator to easily distinguish whether a set value related to individual control for equipment is displayed or a set value related to overall control therefor is displayed.

In order to achieve the above-mentioned object, the present invention provides an air conditioning equipment display device comprising the features of claim 1.

Preferred embodiments are defined by the dependent claims.

In the present invention having the above structure, the third set value related to the overall control is displayed at a position between two set values (the first set value and the second set value) related to the individual control. That is, the first to third set values are displayed at different positions. In addition, the third set value related to the overall control is displayed at a position between the two set values related to the individual control, to thereby coincide with an image of the overall control. Therefore, it is possible to distinguish whether the individual control is performed or only viewing the set value displayed in the display area performs the overall control.

Further, according to the present invention, the first display area, the second display area and the third display area are provided in a line in the horizontal direction, and two or more-digit figures representing the set values are digitally displayed in the first display area, the second display area and the third display area, respectively. In addition, a gap between adjacent display areas is equal to a gap between figures displayed in the respective display areas.

In the present invention having the above structure, when the figures representing the respective set values are displayed in the first display area and the second display area, respectively, a vacant area whose width is larger than the gap between the figures is formed between the first display area and the second display area by means of the third display area in which no figure is displayed, thereby noticeably separating the first display area from the second display area. That is, it is possible to prevent the confusion of the figure representing the first set value displayed in the first display area with the figure representing the second set value displayed in the second display area, without providing an additional area for separating the first display area from the second display area between the first display area and the second display area.

Furthermore, according to the present invention, the first display area, the second display area and the third display area are provided in a line in the horizontal direction, and two-digit or more figures representing the set values are digitally displayed in the first display area, the second display area and the third display area, respectively. In addition, the third display area has an overlapping portion with at least one of the first display area and the second display area and a non-overlapping portion, and a figure is displayed in the overlapping portion and the non-overlapping portion.

In the present invention having the above structure, when the third set value is displayed in the third display area, the figure is displayed in the overlapping portion of the third display area with at least one of the first display area and the second display area and the non-overlapping portion of the third display area with any one of the first display area and the second display area. In addition, when the set values are displayed in the first display area and the second display area, respectively, a figure is displayed in the overlapping portion of the third display area, but no figure is displayed in the non-overlapping portion of the third display area. Therefore, a vacant area is formed for separating the first display area from the second display area. That is, it is possible to prevent the confusion of the figure representing the first set value displayed in the first display area with the figure representing the second set value displayed in the second display area without providing an additional area for separating the first display area from the second display area between the first display area and the second display area, and it is also possible to shorten the total dimension of the first to third display area in the horizontal direction.

Moreover, according to the present invention, the equipment is a vehicle air conditioner, in which the first display area is a driver seat side temperature display area that is provided at the driver seat side of the display unit to display the first set value related to the individual control for the driver seat side temperature inside the vehicle, the second display area is a front passenger seat side temperature display area that is provided at the front passenger seat side of the display unit to display the second set value related to the individual control for the front passenger seat side temperature inside the vehicle, and the third display area is an overall temperature display area for displaying the third set value related to the overall control for the temperature in the entire inner space of the vehicle including a driver seat side space and a front passenger seat side space. Here, two-digit figure representing the first set value is digitally displayed in the driver seat side temperature display area, two-digit figure representing the second set value is digitally displayed in the front passenger seat side temperature display area, and two-digit figure representing the third set value is displayed in the overall temperature display area.

According to the present invention having the above structure, it is possible for an operator to easily distinguish the display of the first set value and the second set value when the driver seat side temperature and the front passenger seat side temperature are individually controlled from the display of the third set value when the overall temperature control inside the vehicle is performed.

Further, according to the present invention, one digit of the driver seat side temperature display area and one digit of the overall temperature display area overlap each other.

According to the present invention having the above structure, it is possible to prevent the confusion of the figure representing the first set value displayed in the driver seat side temperature display area with the figure representing the second set value displayed in the front passenger seat side temperature display area by a portion of the overall temperature display area overlapping the driver seat side temperature display area, and it is also possible to shorten the total dimension of the driver seat side temperature display area, the front passenger seat side temperature display area and the overall temperature display area in the horizontal direction. In addition, since the overall temperature display area is located at a position leaning to the driver seat side temperature display area between the driver seat side temperature display area and the front passenger seat side temperature display area, it is possible to easily view the overall temperature display area from the driver seat side.

As described above, according to the present invention, it is possible to easily distinguish whether the individual control is performed or the overall control is performed on the temperature only by viewing the set value displayed in the display area.

### BRIEF DESCRIPTION OF THE DRAWINGS

Fig. 1 is a view illustrating an operating device of a vehicle air conditioner provided with a display device according to an embodiment of the present invention;
Fig. 2 is a block diagram illustrating an electrical system of the present embodiment;
Fig. 3 is a view illustrating a state in which figures representing a first set value and a second set value are respectively displayed in a driver seat side temperature display area and a front passenger seat side temperature display area of a second large display area shown in Fig. 1;
Fig. 4 is a view illustrating a state in which a figure representing a third set value is displayed in an overall temperature display area of the second large display area shown in Fig. 1;
Fig. 5 is a view illustrating a state in which the figure representing the first set value is displayed in only the driver seat side temperature display area of the second large display area shown in Fig. 1;
Fig. 6 is a view illustrating a state in which the figure representing the second set value is displayed in only the front passenger seat side temperature display area of the second large display area shown in Fig. 1;
Fig. 7 is a view illustrating another example of a second large display area comprising the driver seat side temperature display area, the front passenger seat side temperature display area and the overall temperature display area; and
Fig. 8 is a view illustrating still another example of a second large display area comprising the driver seat side temperature display area, the front passenger seat side temperature display area and the overall temperature display area.

### DESCRIPTION OF THE PREFERRED EMBODIMENTS

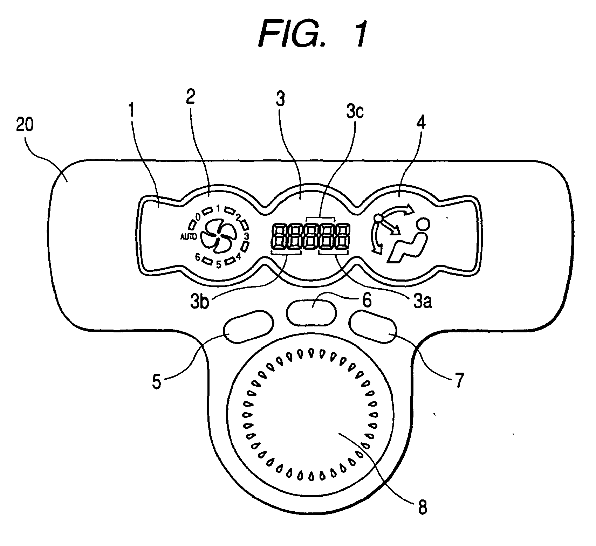

Hereinafter, an embodiment of a display device according to the present invention will be described with reference to Figs. 1 to 3.

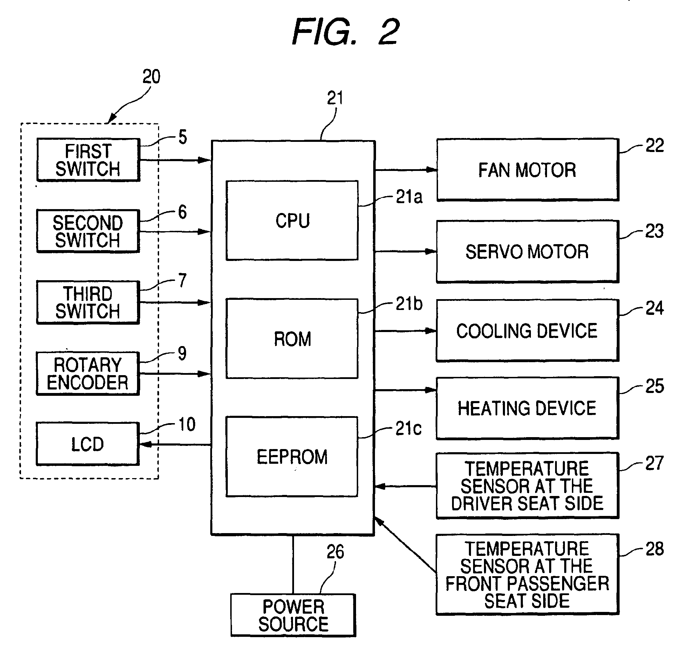

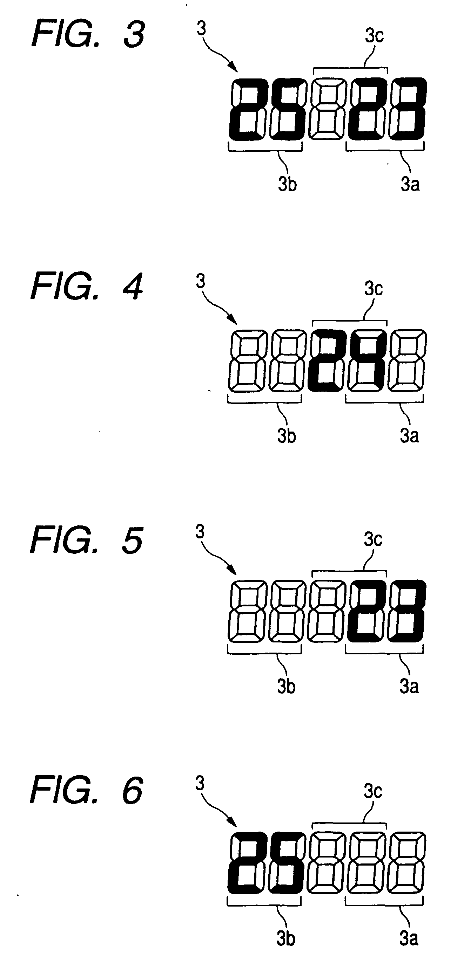

Fig. 1 shows an operating device of a vehicle air conditioner equipped with a display device according to an embodiment of the present invention. Fig. 2 is a block diagram illustrating an electrical system of the present embodiment. Fig. 3 shows a state in which figures representing a first set value and a second set value are respectively displayed in a driver seat side temperature display area and a front passenger seat side temperature display area of a second large display area shown in Fig. 1. Fig. 4 shows a state in which a figure representing a third set value is displayed in an overall temperature display area of the second large display area shown in Fig. 1. Fig. 5 shows a state in which the figure representing the first set value is displayed in only the driver seat side temperature display area of the second large display area shown in Fig. 1. Fig. 6 shows a state in which the figure representing the second set value is displayed in only the front passenger seat side temperature display area of the second large display area shown in Fig. 1.

The present embodiment relates to a vehicle-mounted equipment, such as a display device included in an operating device 20 provided in a vehicle air conditioner. As shown in Fig. 1, the operating device 20 is provided with a liquid crystal display unit 1 according to the present embodiment. The liquid crystal display unit 1 comprises a plurality of large display areas, for example, first to third large display areas 2 to 4 provided in a line. The setup state of a plurality of control items of a vehicle air conditioner, that is, a set value for air volume, a set value for temperature, and a setup state of an air outlet are displayed in these large display areas 2 to 4, respectively.

In the first large display area 2, the set value of air volume is displayed by a character 'AUTO' representing an automatic control, six-level figures '1' to '6', and bars provided between the six-level figures. In other words, when displaying the automatic control, only the character 'AUTO' is brightly displayed. When displaying the set value of air volume, all the figures 1 to 6 are brightly displayed, and the bars between all the figures up to the figure representing the set value are brightly displayed. For example, when the figure '3' is selected as the set value, the figures 1 to 6, a bar between the figures '0' and '1', and a bar between the figures '1' and '2', and a bar between the figures '2' and '3' are brightly displayed.

A two-digit figure representing the set value of temperature is digitally displayed in the second large display area 3. That is, the temperature is displayed by a degree in the range of 16° to 30°.

Further, the setup state of the air outlet is displayed in the second large display area 4 by brightly displaying arrows representing the directions of the wind toward a face, a body and legs. As regards the setup state of the air outlet, air blow toward only the legs, air blow toward the legs and the body, air blow toward only the body, air blow toward the body and the face, and air blow toward the face, the body and the legs are displayed.

Further, the operating device 20 comprises pushbutton type first to third switches 5 to 7 and a rotatable rotary knob 8.

The first to third switches 5 to 7 are arranged in vicinities of lower portions of the first to third large display areas, respectively. When the first switch 5 is pushed, a control item for changing the setup state of air volume is selected. When the second switch 6 is pushed, a control item for changing the setup state of temperature is selected. When the third switch 7 is pushed, a control item for changing the setup state of the air outlet is selected.

The rotary knob 8 is arranged in the vicinity of lower portions of the first and third switches 5 to 7 to change the setup state of the selected control item, and is used in common to all the control items. The operating device 20 is provided with a rotary encoder 9 (see Fig. 2) for detecting the rotation angle of the rotary knob 8 and for outputting the detected rotation angle to a control device 21.

Further, the operating device 20 is connected to the control device 21 (a microcomputer) shown in Fig. 2. The control device 21 comprises a CPU 21a, a ROM 21b, and EEPROM 21c that are driven by the power to be supplied from a power source 26, and is operated based on ON signals to be respectively inputted from the first to third switches 5 to 7 and a rotation angle signal representing the rotation angle of the rotary knob 8 to be inputted from the rotary encoder 9.

The CPU 21a controls an LCD 10, a vehicle air conditioner, and an entire portion of the control device 21, based on the respective ON signals from the first to third switches 5 to 7 and the rotation angle signal from the rotary encoder 9.

The ROM 21b stores control programs and functions in advance to control the LCD 10, the vehicle air conditioner, and the entire portion of the control device 21. In addition, the ROM 21b is included in the vehicle air conditioner in advance and uses the surplus storage capacity to control the LCD 10.

The EEPROM 21c stores values to be calculated by the CPU 21a, the control states of a fan motor 22, a servo motor 23, a cooling device 24 and a heating device 25 of the vehicle air conditioner, the control state of the LCD 10, and detected values from various sensors for controlling the vehicle air conditioner.

Furthermore, the fan motor 22 rotates a fan of the vehicle air conditioner. The servo motor 23 drives a damper or an air mix damper to open and close an air outlet. In general, a plurality of servo motors is provided, but one servo motor 23 is shown in the drawings for simplicity of explanation. In addition, the cooling device 24 refrigerates the air based on the set value of the temperature and the detected values from various sensors at the time of cooling. The heating device 25 heats the air based on the set value of the temperature and the detected values from various sensors at the time of heating. The various sensors include a driver seat side temperature sensor 27 for detecting the temperature at the drive seat side, a front passenger seat side temperature sensor 28 for detecting the temperature at the front passenger seat side inside the vehicle or the like. Moreover, for individual control, the detected values from the driver seat side temperature sensor 27 and the front passenger seat side temperature sensor 28 are individually used, while, for overall control, the average value of both is used.

Particularly, in the present embodiment, as shown in Fig. 1, the second large display area 3 is composed of first to third display areas. The first display area is a driver seat side temperature display area 3a which is provided at the driver seat side (for example, at the right side when a steering wheel is provided at the right side) in the second large display area 3 and in which a first set value related to the individual control for the driver seat side temperature is digitally displayed in a two-digit figure. The second display area is a front passenger seat side temperature display area 3b which is provided at the front passenger seat side in the second large display area 3 and in which a second set value related to the individual control for the front passenger seat side temperature is digitally displayed in a two-digit figure. The third display area is composed of one digit located at the left side in the driver seat side temperature display area 3a and one digit provided between the driver seat side temperature display area 3a and the front passenger seat side temperature display area 3b, and is an overall temperature display area 3c in which a third set value related to the overall control for the temperature in the entire space of the vehicle including the driver seat side space and the front passenger seat side space is displayed. In other words, a five-digit figure can be digitally displayed in the second large display area 3. That is, the two digits on the driver seat side (on the right side) constitute the driver seat side temperature display area 3a, the two digits on the front passenger seat side (on the left side) constitute the front passenger seat side temperature display area 3b, and one digit located at the left side in the driver seat side temperature display area 3a and one digit at the center constitute the overall temperature display area 3c.

Further, the control device 21 controls the LCD 10 such that display is not performed in the overall temperature display area 3c when the figure representing the first set value is displayed in the driver seat side temperature display area 3a and when the figure representing the second set value is displayed in the front passenger seat side temperature display area 3b as shown in Fig. 3. In addition, when the figure representing the third set value is displayed in the overall temperature display area 3c, the control device 21 controls the LCD 10 such that display is not performed in the driver seat side temperature display area 3a and the front passenger seat side temperature display area 3b as shown in Fig. 4.

Furthermore, if the second switch 6 is pushed in a state in which the figures representing the set values are displayed in the driver seat side temperature display area 3a and the front passenger seat side temperature display area 3b, respectively, as shown in Fig. 3, the control device 21 controls the LCD 10 such that the figure representing the third set value related to the overall control is displayed in the overall temperature display area 3c as shown in Fig. 4. Further, if the rotary knob 8 is rotated in a state in which the figure representing the third set value is displayed in the overall temperature display area 3c, the control device 21 controls the LCD 10 such that the figure representing the third set value displayed in the overall temperature display area 3c increases or decreases.

Moreover, if the second switch 6 is pushed in a state in which the figure representing the third set value is displayed in only the overall temperature display area 3c as shown in Fig. 4, the control device 21 controls the LCD 10 such that the figure representing the first set value is displayed in only the driver seat side temperature display area 3a as shown in Fig. 5. In addition, if the rotary knob 8 is rotated in a state in which the figure representing the first set value is displayed in the driver seat side temperature display area 3a, the control device 21 controls the LCD 10 such that only the figure representing the first set value displayed in the driver seat side temperature display area 3a increases or decreases. Further, if the second switch 6 is pushed in a state in which the figure representing the first set value is displayed in the driver seat side temperature display area 3a as shown in Fig. 5, the control device 21 controls the LCD 10 such that the figure representing the second set value is displayed in only the front passenger seat side temperature display area 3b as shown in Fig. 6. In addition, if the rotary knob 8 is rotated in a state in which the figure representing the second set value is displayed in the front passenger seat side temperature display area 3b, the control device 21 controls the LCD 10 such that the figure representing the second set value displayed in the front passenger seat side temperature display area 3b increases or decreases.

The present embodiment having the above structure operates as follows.

### [Setup of air volume]

The operation of setting up air volume will now be described.

First of all, in a state in which the set value of air volume, the set value of temperature, and the setup state of the air outlet that have been previously set are respectively displayed in the first to third large display areas 2 to 4, the operating device 20 is controlled by means of the control device 21 such that any one of the set value of air volume, the set value of temperature, and the setup state of the air outlet is not changed even if the rotary knob 8 is rotated. That is, the operating device 10 is in a display mode.

In a state in which the operating device 20 is in the display mode, when an operator, for example, a driver pushes the first switch 5, an ON signal is inputted from the first switch 5 to the control device 21, and the operating device 20 is controlled by the control device 21. Then, in the operating device 20, the set value of air volume can be changed based on the rotation of the rotary knob 8, and further in the liquid crystal display unit 1 (the LCD 10), the display of the set value of air volume can be changed. That is, the operating device 20 becomes an air volume setting mode. In this case, only the set value of air volume is brightly displayed in the first large display area 2, and the set value of temperature and the setup state of the air outlet are not displayed in the second large display area 3 and the third large display area 4, respectively.

In such an air volume setting mode, when the operator rotates the rotary knob 8, a detection signal representing the rotation angle of the rotary knob 8 is inputted from the rotary encoder 9 to the control device 21, and the LCD 10 is controlled by the control device 21, such that the set value of air volume displayed in the first large display area 2 increases or decreases from the previous set value.

When the rotary knob 8 is not operated within a predetermined time, for example, two seconds, the operating device 20 is controlled by the control device 21. Then, the operating device 20 returns to a display mode in which all the set value of air volume, the set value of temperature and the setup state of the air outlet are displayed in the liquid crystal display unit 1 and any of them is not changed even if the rotary knob 8 is rotated by the operator, thereby completing the setup of air volume.

Further, the fan motor 22 is controlled by the control device 21, such that the fan is driven at a rotational speed corresponding to the air volume that has been lately set.

### [Setup of air outlet]

The operation of setting up the air outlet will now be described.

First, the operating device 20 is in a display mode. At this time, the previous setup state of the air outlet is displayed in the third large display area 4 of the liquid crystal display unit 1.

In a state in which the operating device 20 is in the display mode, when the operator pushes the third switch 7, an ON signal is inputted from the third switch 7 to the control device 21, and the operating device 20 is controlled by the control device 21. Then, in the operating device 20, the setup state of the air outlet can be changed based on the rotation of the rotary knob 8, and in the liquid crystal display unit 1 (the LCD 10), the display of the setup state of the air outlet can be changed. That is, the operating device 20 becomes an air outlet setting mode. At this time, only the setup state of the air outlet is brightly displayed in the third large display area 4, and the set value of air volume and the set value of temperature are not displayed in the first large display area 2 and the second large display area 3, respectively.

In such an air outlet setting mode, when the operator rotates the rotary knob 8, a detection signal representing the rotation angle of the rotary knob 8 is inputted from the rotary encoder 9 to the control device 21, and the LCD 10 is controlled by the control device 21, such that the display of the third large display area 4 is switched from the display of the previously set air outlet to the display of another air outlet.

When the rotary knob 8 is not operated within two seconds, the operating device 20 is controlled by the control device 21. Then, the operating device 20 returns to the display mode in which all the set value of air volume, the set value of temperature and the setup state of the air outlet are displayed in the liquid crystal display unit 1 and any of them is not changed even if the rotary knob 8 is rotated by the operator, thereby completing the setup of the air outlet.

Further, the servo motor 23 is controlled by the control device 21, such that a damper corresponding to the lately set air outlet is opened and dampers not corresponding thereto are closed.

### [Setup of temperature]

The operation of setting up the temperature will now be described by way of the following three cases.

### (1) A case of setting in which the temperature related to overall control

First of all, the operating device 20 is in the display mode. A figure '23' representing the first set value that has been previously set is displayed in the driver seat side temperature display area 3a of the second large display area 3, and a figure '25' representing the second set value that has been previously set is displayed in the front passenger seat side temperature display area 3b as shown in Fig. 3.

In a state in which the operating device 20 is in the display mode, when the operator pushes the second switch 6 once, an ON signal is inputted from the second switch 6 to the control device 21 once, and the operating device 20 is controlled by the control device 21. Then, in the operating device 20, the third set value can be changed based on the rotation of the rotary knob 8, and in the liquid crystal display unit 1, the display of the figure representing the third set value displayed in the overall temperature display area 3c can be changed. That is, the operating device 20 becomes an overall temperature setting mode. At this time, in the liquid crystal display unit 1, only the figure representing the third set value is brightly displayed in the overall temperature display area 3c of the second large display area 3, while the set value of air volume and the setup state of the air outlet are not displayed in the first large display area 2 and the third large display area 4, respectively. That is, when the third set value that has been previously set is '24', the figure '24' is displayed in the overall temperature display area 3c.

In such an overall temperature setting mode, when the operator rotates the rotary knob 8, a detection signal representing the rotation angle of the rotary knob 8 is inputted from the rotary encoder 9 to the control device 21, and the LCD 10 is controlled by the control device 21, such that the figure representing the third set value displayed in the overall temperature display area 3c increases or decreases from '24'.

That is, when the rotary knob 8 is rotated in the right direction of Fig 1, the figure displayed in the overall temperature display area 3c as the third set value increases one by one from '24' to '25', '26', ···, '30'. On the other hand, when the rotary knob 8 is rotated in the left direction, the figure displayed in the overall temperature display area 3c as the third set value decreases one by one from '24' to '23', '22', ···, '16'.

When the rotary knob 8 is not operated within two seconds, the operating device 20 is controlled by the control device 21. Then, the operating device 20 returns to the display mode in which all the set value of air volume, the set value of temperature and the setup state of the air outlet are displayed in the liquid crystal display unit 1 and any of them is not changed even if the rotary knob 8 is rotated by the operator, thereby completing the setup of temperature related to the overall control. At this time, in the second large display area 3, only the figure representing the third set value that has been lately set is displayed in the overall temperature display area 3c, and no figures are displayed in the driver seat side temperature display area 3a and the front passenger seat side temperature display area 3b.

### (2) A case of setting the temperature related to individual control for the driver seat side

First of all, the operating device 20 is in the display mode. In the second large display area 3, as shown in Fig. 3, a figure '23' representing the first set value that has been previously set is displayed in the driver seat side temperature display area 3a, and a figure '25' representing the second set value that has been previously set is displayed in the front passenger seat side temperature display area 3b.

In a state in which the operating device 20 is in the display mode, when the operator pushes the second switch 6 twice, an ON signal is inputted from the second switch 6 to the control device 21 twice, and the operating device 20 is controlled by the control device 21. Then, in the operating device 20, the first set value can be changed based on the rotation of the rotary knob 8, and in the liquid crystal display unit 1 (the LCD 10), the display of the figure representing the first set value displayed in the driver seat side temperature display area 3a can be changed. That is, the operating device 20 becomes a driver seat side temperature setting mode. At this time, in the liquid crystal display unit 1, only the figure representing the first set value is displayed in the driver seat side temperature display area 3a of the second large display area 3, and the display of the set value of air volume in the first large display area 2 and the display of the setup state of the air outlet in the third large display area 4 are not performed. That is, the figure '23' representing the first set value that has been previously set is displayed in the driver seat side temperature display area 3a.

In such a driver seat side temperature setting mode, when the operator rotates the rotary knob 8, a rotation angle signal representing the rotation angle of the rotary knob 8 is inputted from the rotary encoder 9 to the control device 21, and the LCD 10 is controlled by the control device 21, such that the figure representing the first set value displayed in the driver seat side temperature display area 3a increases or decreases from '23'.

That is, when the rotary knob 8 is rotated in the right direction of Fig 1, the figure displayed in the driver seat side temperature display area 3a as the first set value increases one by one from '23' to '24', '25', ···, '30'. On the other hand, when the rotary knob 8 is rotated in the left direction, the figure displayed in the driver seat side temperature display area 3a as the first set value decreases one by one from '23' to '22', '21', ···, '16'.

When the rotary knob 8 is not operated within, for example, two seconds, the operating device 20 is controlled by the control device 21. Then, the operating device 20 returns to the display mode in which all the set value of air volume, the set value of temperature and the setup state of the air outlet are displayed in the liquid crystal display unit 1 and any of them is not changed even if the rotary knob 8 is rotated by the operator, thereby completing the setup of temperature related to the individual control for the driver seat side. In this case, in the second large display area 3, the figure representing the first set value that has been lately set is displayed in the driver seat side temperature display area 3a, the figure representing the second set value that has been previously set is displayed in the front passenger seat side temperature display area 3b, and no figure is displayed in one digit located at the left side in the overall temperature display area 3c.

### (3) A case of setting the temperature related to individual control for the front passenger seat side

First of all, the operating device 20 is in the display mode. In the second large display area 3, as shown in Fig. 3, a figure '23' representing the first set value that has been previously set is displayed in the driver seat side temperature display area 3a, and a figure '25' representing the second set value that has been previously set is displayed in the front passenger seat side temperature display area 3b.

In a state in which the operating device 20 is in the display mode, when the operator pushes the second switch 6 three times, an ON signal is inputted from the second switch 6 to the control device 21 three times, and the operating device 20 is controlled by the control device 21. Then, in the operating device 20, the second set value can be changed based on the rotation of the rotary knob 8, and in the liquid crystal display unit 1, the display of the figure representing the second set value displayed in the front passenger seat side temperature display area 3b can be changed. That is, the operating device 20 becomes a front passenger seat side temperature setting mode. At this time, in the liquid crystal display unit 1, only the figure representing the second set value is displayed in the front passenger seat side temperature display area 3b of the second large display area 3, while the display of the set value of air volume in the first large display area 2 and the display of the setup state of the air outlet in the third large display area 4 are not performed. That is, the figure '25' representing the second set value that has been previously set is displayed in the front passenger seat side temperature display area 3b.

In such a front passenger seat side temperature setting mode, when the operator rotates the rotary knob 8, a rotation angle signal representing the rotation angle of the rotary knob 8 is inputted from the rotary encoder 9 to the control device 21, and the LCD 10 is controlled by the control device 21, such that the figure representing the second set value displayed in the front passenger seat side temperature display area 3b increases or decreases from '25'.

That is, when the rotary knob 8 is rotated in the right direction of Fig 1, the figure displayed in the front passenger seat side temperature display area 3b as the second set value increases one by one from '25' to '26', '27', ···, '30'. On the other hand, when the rotary knob 8 is rotated in the left direction, the figure displayed in the front passenger seat side temperature display area 3b as the second set value decreases one by one from '25' to '24', '23', ···, '16'.

When the rotary knob 8 is not operated within two seconds, the operating device 20 is controlled by the control device 21. Then, the operating device 20 returns to the display mode in which all the set value of air volume, the set value of temperature and the setup state of the air outlet are displayed in the liquid crystal display unit 1 and any of them is not changed even if the rotary knob 8 is rotated by the operator, thereby completing the setup of temperature for the front passenger seat side. At this time, in the second large display area 3, the figure representing the first set value that has been previously set is displayed in the driver seat side temperature display area 3a, the figure representing the second set value that has been lately set is displayed in the front passenger seat side temperature display area 3b, and no figure is displayed in one digit located at the left side in the overall temperature display area 3c.

When the set values are changed as described in these three cases, a vehicle air conditioner is controlled by the control device 21 according to the set values. That is, the heating device 25 is controlled at the time of cooling, and the cooling device 24 is controlled at the time of heating. In addition, the opening or closing of an air mix damper is adjusted by controlling the servo motor 23. Therefore, in the case (1), the overall temperature inside the entire space of a vehicle including the driver seat side space and the front passenger seat side space is controlled. In the cases (2) and (3), the temperature in the driver seat side space and the temperature in the front passenger seat side space are individually controlled.

The present embodiment has the following effects.

The third set value related to the overall control is displayed at a position between the two set values (the first set value and the second set value) related to the individual control. That is, the first to third set values are displayed at different positions. In addition, the third set value related to the overall control is displayed at a position between the two set values related to the individual control, to thereby coincide with an image of the overall control. Therefore, it is possible to distinguish whether the individual control is performed or the overall control is performed only by viewing the set values displayed in the display areas.

Further, when the figures representing the set values are displayed in the driver seat side temperature display area 3a and the front passenger seat side temperature display area 3b, respectively, a figure is displayed in a first digit located at the left side in the driver seat side temperature display area 3a that overlaps one digit located at the right side in the overall temperature display area 3c, but no figure is displayed in a second digit located at the left side in the overall temperature display area 3c. That is, the first digit located at the left side in the overall temperature display area 3c is a vacant area separating the driver seat side temperature display area 3a from the front passenger seat side temperature display area 3b. In this way, it is possible to prevent the confusion of the figure representing the first set value displayed in the driver seat side temperature display area 3a with the figure representing the second set value displayed in the front passenger seat side temperature display area 3b. In addition, it is possible to shorten the dimension of the second large display area 3 in the horizontal direction by one digit, thereby achieving a compact liquid crystal display unit 1.

Furthermore, since the second digit located at the right side in the overall temperature display area 3c overlaps the first digit located at the left side in the driver seat side temperature display area 3a, the overall temperature display area 3c is located at a position leaning to the driver seat side between the driver seat side temperature display area 3a and the front passenger seat side temperature display area 3b. Therefore, it is possible for a driver to easily view the overall temperature display area 3c.

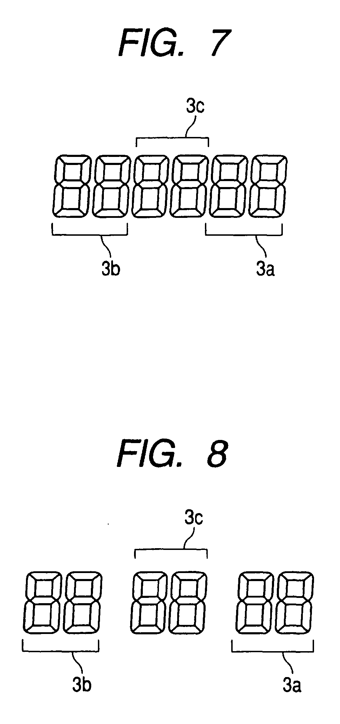

Moreover, according to the present embodiment, a five-digit figure can be displayed in the second large display area 3, and the overall temperature display area 3c and the driver seat side temperature display area 3a are made to overlap by only one digit. However, the present invention is not limited thereto. That is, if there are no space limitations on the second large display area 3, the second large display area 3 may be made to display a six-digit figure, and two digits of the six digits may be assigned to the overall temperature display area 3c, as shown in Figs 7 and 8. In this case, the gap between the driver seat side temperature display area 3a and the overall temperature display area 3c and the gap between the front passenger seat side temperature display area 3b and the overall temperature display area 3c may be equal to the gap between figures as shown in Fig. 7, or may be larger than the gap between figures as shown in Fig. 8.

Further, according to the present embodiment, the first set value related to the individual control for the driver seat side temperature and the second set value related to the individual control for the front passenger seat side temperature are displayed in the display device provided in the operating device 20 for operating a vehicle air conditioner, but the present invention is not limited thereto. That is, when the present invention is applied to a vehicle air conditioner capable of individually controlling the temperature around a rear passenger seat located at the rear side of the driver seat or the front passenger seat, temperature display areas for displaying set values related to the individual control for the respective seats may be arranged in the display device similar to the arrangement of the seats, and an overall temperature display area for displaying a set value related to the overall control may be arranged at the center of these temperature display areas. In this case, a set value of the temperature around the respective seats on the driver seat side may be a first set value, and a set value of the temperature around the respective seats on the front passenger seat side may be a second set value.

Furthermore, a vehicle air conditioner is used as an object of application of the present embodiment, and three set values, that is, the first set value related to the individual control for the driver seat side temperature, the second set value related to the individual control for the front passenger seat side temperature, and the third set value related to the overall control are displayed in the operating device 20 of the vehicle air conditioner. However, the present invention is not limited thereto. That is, the present invention can be applied to air conditioning equipment in a building in which three or more set values related to the individual control are displayed in a display unit. In this case, the third set value related to the overall control may be displayed between two adjacent set values. In this case, the two adjacent set values are the first set value and the second set value, respectively.

## Claims

1. An air conditioning equipment display device comprising:
a display unit (1) having a first display area (3a) and a second display area (3b) being respectively displayed with a first set value and a second set value related to individual control of the equipment, and a third display area 3c being displayed with a third set value related to overall control of the equipment; and
control means (21) for controlling the display unit (1) such that, when the first set value is displayed in the first display area (3a) and the second set value is displayed in the second display area (3b), display is not performed in the third display area (3c), and such that, when the third set value related to the overall control is displayed in the third display area (3c), display is not performed in the first display area and the second display area (3a, 3b),
wherein the third display area (3c) is provided at a position between the first display area (3a) and the second display area (3b).

2. The display device according to claim 1,
wherein the first display area (3a), the second display area (3b) and the third display area are provided in a line in the horizontal direction,
wherein two or more-digit figures representing the set values are digitally displayed in the first displays (3a) area, the second display area (3b) and the third display area (3c), respectively, and
wherein a gap between adjacent display areas is equal to a gap between figures displayed in the respective display areas.

3. The display device according to claim 1,
wherein the first display area (3a), the second display area (3b) and the third display area (3c) are provided in a line in the horizontal direction,
wherein two or more-digit figures representing the set values are digitally displayed in the first display area, the second display area and the third display area, respectively, and
wherein the third display area (3c) has an overlapping portion with at least one of the first display area and the second display area and a non-overlapping portion, and the figure is displayed in the overlapping portion and the non-overlapping portion.

4. The display device according to any of claims 1 to 3,
wherein the equipment is a vehicle air conditioner,
wherein the first display area (3a) is a driver seat side temperature display area that is provided at the driver seat side of the display unit (1) to display the first set value related to the individual control for the driver seat side temperature inside the vehicle,
wherein the second display area (3b) is a front passenger seat side temperature display area that is provided at the front passenger seat side of the display unit to display the second set value related to the individual control for the front passenger seat side temperature inside the vehicle,
wherein the third display area (3c) is an overall temperature display area for displaying the third set value related to the overall control of the temperature in the entire inner space of the vehicle including a driver seat side space and a front passenger seat side space, and
wherein two-digit figures representing the first set value are digitally displayed in the driver seat side temperature display area, two-digit figures representing the second set value are digitally displayed in the front passenger seat side temperature display area, and two-digit figures representing the third set value are displayed in the overall temperature display area.

5. The display device according to claim 4,
wherein one digit of the driver seat side temperature display area (3a) and one digit of the overall temperature display area (3c) overlap each other.

## Patentansprüche

1. Klimaanlagen-Anzeigevorrichtung, aufweisend:
eine Anzeigeeinheit (1) mit einem ersten Anzeigebereich (3a) und einem zweiten Anzeigebereich (3b), in denen ein erster Einstellwert bzw. ein zweiter Einstellwert im Hinblick auf eine individuelle Steuerung der Anlage angezeigt werden, sowie einem dritten Anzeigebereich (3c), in dem ein dritter Einstellwert im Hinblick auf eine Gesamtsteuerung der Anlage angezeigt wird; und
eine Steuereinrichtung (21) zum Steuern der Anzeigeeinheit (1) in einer derartigen Weise, dass bei Anzeige des ersten Einstellwerts in dem ersten Anzeigebereich (3a) und bei Anzeige des zweiten Einstellwerts in dem zweiten Anzeigebereich (3b) keine Anzeige in dem dritten Anzeigebereich (3c) stattfindet, sowie derart, dass bei Anzeige des dritten Einstellwerts im Hinblick auf die Gesamtsteuerung in dem dritten Anzeigebereich (3c) keine Anzeige in dem ersten Anzeigebereich und dem zweiten Anzeigebereich (3a, 3b) stattfindet,
wobei der dritte Anzeigebereich (3c) an einer Stelle zwischen dem ersten Anzeigebereich (3a) und dem zweiten Anzeigebereich (3b) vorgesehen ist.

2. Anzeigevorrichtung nach Anspruch 1,
wobei der erste Anzeigebereich (3a), der zweite Anzeigebereich (3b) und der dritte Anzeigebereich in einer Linie in horizontaler Richtung vorgesehen sind,
wobei zwei oder mehr Stellen aufweisende Zahlen, die die Einstellwerte darstellen, in dem ersten Anzeigebereich (3a), dem zweiten Anzeigebereich (3b) bzw. dem dritten Anzeigebereich (3c) digital angezeigt werden, und
wobei ein Spalt zwischen einander benachbarten Anzeigebereichen gleich einem Spalt zwischen Zahlen ist, die in den jeweiligen Anzeigebereichen angezeigt werden.

3. Anzeigevorrichtung nach Anspruch 1,
wobei der erste Anzeigebereich (3a), der zweite Anzeigebereich (3b) und der dritte Anzeigebereich (3c) in einer Linie in horizontaler Richtung vorgesehen sind,
wobei zwei oder mehr Stellen aufweisende Zahlen, die die Einstellwerte darstellen, in dem ersten Anzeigebereich, dem zweiten Anzeigebereich bzw. dem dritten Anzeigebereich digital angezeigt werden, und
wobei der dritte Anzeigebereich (3c) einen überlappenden Bereich mit zumindest einem von dem ersten Anzeigebereich und dem zweiten Anzeigebereich sowie einen nicht-überlappenden Bereich aufweist und die Zahl in dem überlappenden Bereich sowie in dem nicht-überlappenden Bereich angezeigt wird.

4. Anzeigevorrichtung nach einem der Ansprüche 1 bis 3,
wobei es sich bei der Anlage um eine Fahrzeugklimaanlage handelt,
wobei es sich bei dem ersten Anzeigebereich (3a) um einen Fahrersitz-seitigen Temperaturanzeigebereich handelt, der auf der Fahrersitzseite der Anzeigeeinheit (1) vorgesehen ist, um den ersten Einstellwert im Hinblick auf eine individuelle Steuerung für die Fahrersitz-seitige Temperatur im Inneren des Fahrzeugs anzuzeigen,
wobei es sich bei dem zweiten Anzeigebereich (3b) um einen Beifahrersitzseitigen Temperaturanzeigebereich handelt, der auf der Beifahrerseite der Anzeigeeinheit vorgesehen ist, um den zweiten Einstellwert im Hinblick auf eine individuelle Steuerung für die Beifahrersitz-seitige Temperatur im Inneren des Fahrzeugs anzuzeigen,
wobei es sich bei dem dritten Anzeigebereich (3c) um einen Gesamttemperaturanzeigebereich zum Anzeigen der dritten Einstelltemperatur im Hinblick auf eine Gesamtsteuerung der Temperatur im gesamten Innenraum des Fahrzeugs einschließlich einem Fahrersitz-seitigen Raum und einem Beifahrersitzseitigen Raum handelt,
wobei zweistellige Zahlen, die den ersten Einstellwert darstellen, in dem Fahrersitz-seitigen Temperaturanzeigebereich digital angezeigt werden, zweistellige Zahlen, die den zweiten Einstellwert darstellen, in dem Beifahrersitz-seitigen Temperaturanzeigebereich digital angezeigt werden und zweistellige Zahlen, die den dritten Einstellwert darstellen, in dem Gesamttemperaturanzeigebereich angezeigt werden.

5. Anzeigevorrichtung nach Anspruch 4,
wobei eine Stelle des Fahrersitz-seitigen Temperaturanzeigebereichs (3a) und eine Stelle des Gesamttemperaturanzeigebereichs (3c) einander überlappen.

## Revendications

1. Dispositif d'affichage pour équipement de climatisation comprenant :
une unité d'affichage (1) ayant une première zone d'affichage (3a) et une deuxième zone d'affichage (3b) affichées respectivement avec une première valeur de consigne et une deuxième valeur de consigne liées à la commande individuelle de l'équipement, et une troisième zone d'affichage (3c) affichée avec une troisième valeur de consigne liée à la commande globale de l'équipement ; et
un moyen de commande (21) pour commander l'unité d'affichage (1) de telle façon que, lorsque la première valeur de consigne est affichée dans la première zone d'affichage (3a) et que la deuxième valeur de consigne est affichée dans la deuxième zone d'affichage (3b), il n'y a pas d'affichage dans la troisième zone d'affichage (3c), et de telle façon que, lorsque la troisième valeur de consigne liée à la commande globale de l'équipement est affichée dans la troisième zone d'affichage (3c), il n'y a pas d'affichage dans la première zone d'affichage ni dans la deuxième zone d'affichage (3a, 3b),
dans lequel la troisième zone d'affichage (3c) est placée dans une position située entre la première zone d'affichage (3a) et la deuxième zone d'affichage (3b).

2. Dispositif d'affichage selon la revendication 1,
dans lequel la première zone d'affichage (3a), la deuxième zone d'affichage (3b) et la troisième zone d'affichage sont placées en ligne dans le sens horizontal,
dans lequel des nombres à deux chiffres ou plus représentant les valeurs de consignes sont affichés numériquement dans la première zone d'affichage (3a), la deuxième zone d'affichage (3b) et la troisième zone d'affichage (3c), respectivement, et
dans lequel l'espace séparant les zones d'affichage adjacentes est égal à l'espace entre les nombres affichés dans les zones d'affichage respectives.

3. Dispositif d'affichage selon la revendication 1,
dans lequel la première zone d'affichage (3a), la deuxième zone d'affichage (3b) et la troisième zone d'affichage (3c) sont placées en ligne dans le sens horizontal,
dans lequel des nombres à deux chiffres ou plus représentant les valeurs de consignes sont affichés numériquement dans la première zone d'affichage, la deuxième zone d'affichage et la troisième zone d'affichage (3c), respectivement, et
dans lequel la troisième zone d'affichage (3c) a une partie de chevauchement avec au moins l'une des première et deuxième zones d'affichage et une partie sans chevauchement, et le nombre est affiché dans la partie de chevauchement et la partie sans chevauchement.

4. Dispositif d'affichage selon l'une quelconque des revendications 1 à 3,
dans lequel l'équipement est une climatisation de véhicule,
dans lequel la première zone d'affichage (3a) est une zone d'affichage de température côté siège du conducteur qui est prévue du côté siège du conducteur de l'unité d'affichage (1) pour afficher la première valeur de consigne liée à la commande individuelle pour la température côté siège du conducteur à l'intérieur du véhicule,
dans lequel la deuxième zone d'affichage (3b) est une zone d'affichage de température côté siège de passager avant qui est prévue du côté siège de passager avant de l'unité d'affichage pour afficher la deuxième valeur de consigne liée à la commande individuelle pour la température côté siège de passager avant à l'intérieur du véhicule,
dans lequel la troisième zone d'affichage (3c) est une zone d'affichage de température globale pour afficher la troisième valeur de consigne liée à la commande globale de la température dans l'espace intérieur entier du véhicule, y compris un espace côté siège du conducteur et un espace côté siège de passager avant, et
dans lequel des nombres à deux chiffres représentant la première valeur de consigne sont affichés numériquement dans la zone d'affichage de température côté siège du conducteur, des nombres à deux chiffres représentant la deuxième valeur de consigne sont affichés numériquement dans la zone d'affichage de température côté siège de passager avant et des nombres à deux chiffres représentant la troisième valeur de consigne sont affichés dans la zone d'affichage de température globale.

5. Dispositif d'affichage selon la revendication 4,
dans lequel un chiffre de la zone d'affichage de température côté siège du conducteur (3a) et un chiffre de la zone d'affichage de température globale (3c) se chevauchent.
